# EUROPEAN PATENT APPLICATION

(11) **EP 4 822 825 A1**
(43) Date of publication of application: **14.10.2026**
(21) Application number: 26171199.8
(22) Date of filing: 08.04.2026
(51) Int. Cl.: H01M 10/613, H01M 10/6556, H01M 10/6568, H01M 10/6569, H01M 10/658, H01M 10/6567

(54) **BATTERY IMMERSION COOLING APPARATUS AND METHOD THEREOF**

(30) Priority: 09.04.2025 KR 20250046326; 29.09.2025 KR 20250141524
(71) Applicant: SK Innovation Co., Ltd., Seoul 03188 (KR); SK On Co., Ltd., Seoul 03161 (KR)
(72) Inventor: CHO, June Ho, 34124 Daejeon (KR); KIM, Byung Soo, 34124 Daejeon (KR); BAE, Sun Hyuk, 34124 Daejeon (KR); LEE, Jun Young, 34124 Daejeon (KR)
(74) Representative: Prüfer & Partner mbB Patentanwälte · Rechtsanwälte

(57) **Abstract**

The present disclosure relates to a battery immersion cooling apparatus and a battery immersion cooling method. A battery immersion cooling apparatus according to an embodiment of the present disclosure includes a module case (100) accommodating a plurality of battery cells (10) and containing an immersion coolant configured to cool the plurality of battery cells (10) by immersion, and a cooling unit (200) disposed on one side of the module case (100) and configured to circulate a circulation coolant. The cooling unit (200) includes a circulation coolant inlet (210) and a circulation coolant outlet (220), and the circulation coolant circulates through a flow path of the cooling unit (200) and exchanges heat with the immersion coolant to indirectly cool the plurality of battery cells (10).

## Description

### [BACKGROUND OF THE INVENTION]

### Technical Field

The present disclosure relates to battery cooling technology applied to an Energy Storage System (ESS), and more particularly, to a battery immersion cooling apparatus and a battery immersion cooling method using an immersion cooling scheme and an external cooling unit.

### Description of the Related Art

Energy Storage Systems (ESS) are utilized in various application fields, such as power demand regulation, renewable energy storage, and power quality improvement. In particular, the utilization of ESS based on lithium-ion batteries is rapidly increasing.

However, due to the high energy density characteristics of lithium-ion batteries, there is an inherent risk that thermal runaway, if it occurs, may lead to a rapid temperature rise and fire. Accordingly, the importance of highly reliable cooling technology is being significantly highlighted.

Recently, as a significant number of ESS fire accidents have been attributed to the propagation of thermal runaway caused by heat transfer between cells, a need has been raised for a cooling structure capable of rapidly controlling heat generation in a single cell and preventing propagation to adjacent cells.

### [SUMMARY OF THE INVENTION]

Embodiments of the present disclosure may provide a battery immersion cooling apparatus and a battery immersion cooling method capable of efficiently controlling thermal runaway propagation by performing indirect heat exchange between an immersion coolant that cools a battery cell by immersion and a circulation coolant circulated by a cooling unit.

According to the present invention, there is provided a battery immersion cooling apparatus comprising: a module case accommodating a plurality of battery cells and containing an immersion coolant configured to immerse the battery cells; and a cooling unit disposed on at least one side of the module case and configured to circulate a circulation coolant. The cooling unit includes a circulation coolant inlet and a circulation coolant outlet, and the circulation coolant circulates through a flow path of the cooling unit and exchanges heat with the immersion coolant to indirectly cool the plurality of battery cells.

In some non-limiting embodiments, the cooling unit may be disposed on at least one of an upper side, a lower side, and a lateral side of the module case.

In some non-limiting embodiments, the cooling unit may include a cooling layer having a plate-shaped structure in which a planar cooling flow path is formed.

In some non-limiting embodiments, the cooling unit may include a serpentine tube assembly having a plurality of cooling pipes arranged in a repeating pattern, and the plurality of cooling pipes may be aligned with thermal barriers disposed between adjacent battery cells within the plurality of battery cells e.g., to concentrate heat removal at cell boundary regions and inhibit thermal runaway propagation.

In some non-limiting embodiments, the serpentine tube assembly may be disposed at a vertical distance above top ends of the plurality of battery cells by a predetermined distance e.g., sufficient to provide a gas venting pathway during a thermal runaway event.

In some non-limiting embodiments, the cooling unit may be a pipe-shaped structure including a plurality of straight or bent cooling pipes.

In some non-limiting embodiments, the circulation coolant may flow in a single direction from the circulation coolant inlet to the circulation coolant outlet within the pipe-shaped structure.

In some non-limiting embodiments, the pipe-shaped structure may include distribution manifold tubes and interconnecting tubes connecting the distribution manifold tubes, and the interconnecting tubes may be arranged in parallel or in series.

In some non-limiting embodiments, the flow path of the cooling unit may be configured as a single loop or multiple loops connected in parallel or in series.

In some non-limiting embodiments, the circulation coolant may include at least one selected from the group consisting of a propylene glycol/water solution (e.g., PG25 or a 25% propylene glycol/water mixture), a mineral oil-based dielectric fluid, a synthetic oil-based dielectric fluid, a natural ester-based dielectric fluid, a synthetic ester-based dielectric fluid, a fluorocarbon-based dielectric fluid, a perfluorinated fluid (e.g., Fluorinert-based fluid), a hydrofluoroether (HFE) fluid (e.g., Novec-based fluid), and a perfluoropolyether (PFPE) fluid.

In some non-limiting embodiments, the cooling unit may be coupled to a metal heat sink, e.g., for immediate heat dissipation, or a phase change material (PCM), e.g., for latent heat absorption, in a stacked manner.

According to another aspect of the present invention, there is provided a battery immersion cooling method comprising: preparing a module case accommodating a plurality of battery cells; filling the module case with an immersion coolant to immerse the battery cells; disposing a cooling unit on at least one side of the module case, the cooling unit having a circulation coolant inlet and a circulation coolant outlet defining a flow path therebetween; circulating a circulation coolant through the flow path of the cooling unit from the circulation coolant inlet to the circulation coolant outlet; and indirectly cooling the battery cells by exchanging heat with the immersion coolant using the circulation coolant circulating through the flow path.

In some non-limiting embodiments, the cooling unit may be installed on at least one of an upper side, a lower side, and a lateral side of the module case.

In some non-limiting embodiments, the cooling unit may include a cooling layer having a plate-shaped structure in which one or more planar cooling flow path are formed.

In some non-limiting embodiments, the cooling unit may be formed as a serpentine tube assembly in which a plurality of cooling pipes are repeatedly arranged, and the cooling pipes may be aligned to correspond to thermal barriers disposed between the battery cells.

In some non-limiting embodiments, the serpentine tube assembly may be disposed at a vertical distance above top ends of the battery cells sufficient to provide a gas venting pathway during a thermal runaway event.

In some non-limiting embodiments, the cooling unit may be formed as a pipe-shaped structure including a plurality of straight or bent cooling pipes.

In some non-limiting embodiments, the pipe-shaped structure may be formed such that the circulation coolant flows in a single direction from the circulation coolant inlet to the circulation coolant outlet.

In some non-limiting embodiments, the pipe-shaped structure may be formed of distribution manifold tubes and interconnecting tubes, and the interconnecting tubes may be arranged in parallel or in series.

In some non-limiting embodiments, the cooling unit may be coupled to a metal heat sink for immediate heat dissipation or a phase change material (PCM) for latent heat absorption in a stacked manner.

In some non-limiting embodiments, by applying an immersion cooling structure using an immersion coolant and an indirect cooling structure utilizing a cooling unit in which a circulation coolant circulates, thermal runaway propagation may be effectively blocked.

### [BRIEF DESCRIPTION OF THE DRAWINGS]

The above and other objects, features and other advantages of the present disclosure will be more clearly understood from the following detailed description taken in conjunction with the accompanying drawings, in which:
FIGS. 1 to 4 are schematic views of a battery immersion cooling apparatus having a cooling layer according to an embodiment of the present disclosure.
FIG. 5 is a schematic view of a battery immersion cooling apparatus having a cooling unit of a serpentine tube assembly according to an embodiment of the present disclosure.
FIG. 6 is a schematic view illustrating an alignment between a cooling unit of a serpentine tube assembly and battery cell thermal barriers according to an embodiment of the present disclosure.
FIG. 7 is a schematic view of a battery immersion cooling apparatus having a cooling unit of a pipe-shaped structure according to an embodiment of the present disclosure.
FIG. 8 is a flowchart illustrating a battery immersion cooling method according to an embodiment of the present disclosure.

### [DETAILED DESCRIPTION OF THE INVENTION]

Hereinafter, exemplary embodiments of the present disclosure will be described in detail with reference to the accompanying drawing so that those skilled in the art may readily practice the present disclosure.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "group" is intended to include one or more items (e.g., related items, a combination of related and unrelated items, and/or the like) and may be used interchangeably with "one or more" or "at least one". Where only one item is intended, the term "one" or similar language is used. Also, as used herein, the terms "comprise", "comprises", "comprising", "include", "includes", "including", "has", "have", "having", "provide", "provides", "providing", or the like are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments or aspects, refer to a condition for automatically triggering an action (e.g., a specific operation of an electronic device, such as a computing device, a processor, and/or the like).

It will be understood that when a component is described as being "connected," "combined" or "coupled" to another component, the component may be directly connected or coupled to the other component, but it may be "connected," "combined" or "coupled" to the other component by an intervening other component that may be present.

Also, as used herein, the terms "upper", "lower", "bottom", "side", "lateral", "above" or the like are used with reference to the respective positions or orientations, respectively, shown in the drawings for representing a positional relationship in the given context. Specifically, the terms "upper", "lower", "bottom" and "above" refer to a height direction as depicted in the drawings.

Further, in describing the components of the embodiment or aspect, the meaning of "or" may mean each of the components, may mean two or more of the components, or may mean all of the components. For example, it should be understood that the expressions "a, b or c" represent any one of "a," "b," "c," "a and b," "a and c," "b and c," and "a, b and c."

Components comprised in one embodiment or aspect and components comprising common functions will be described using the same names in other embodiments or aspects. The description given in one embodiment or aspect may be applied to other embodiments or aspects, and therefore will not be described in detail within the overlapping range, unless there is a description opposite thereto.

Provided and described herein is a dual cooling system that combines direct immersion cooling with indirect heat exchange via a separate cooling unit. The design effectively blocks thermal runaway propagation from an initial heat generation point to adjacent cells, which is important in lithium-ion battery applications, as such batteries typically have high energy density characteristics that create inherent risks of rapid temperature rise and fire. The immersion coolant directly contacts the battery cells to absorb heat, mitigating local heat generation and maintaining uniform overall temperature. The overall design reduces temperature deviation between cells and improves cooling efficiency uniformity during normal operation and initial thermal events. Inclusion of a cold plate promotes even coolant circulation and effective heat exchange, thereby improving thermal response speed. Further, the circulation coolant in the cooling unit continuously removes heat from the immersion coolant, preventing heat accumulation in the module case. This dual-path architecture ensures that even if one cooling mechanism is temporarily overwhelmed during a thermal runaway event, the other continues to function, providing fail-safe thermal management.

Unlike conventional air cooling systems, which are limited by low heat transfer coefficients, or conventional liquid cold plate systems that cool only the cell bottom surface, the present disclosure provides cooling to the entire cell surface through immersion while maintaining continuous heat removal through the external cooling unit. This results in more uniform cell temperatures and faster thermal response compared to single-mode cooling approaches.

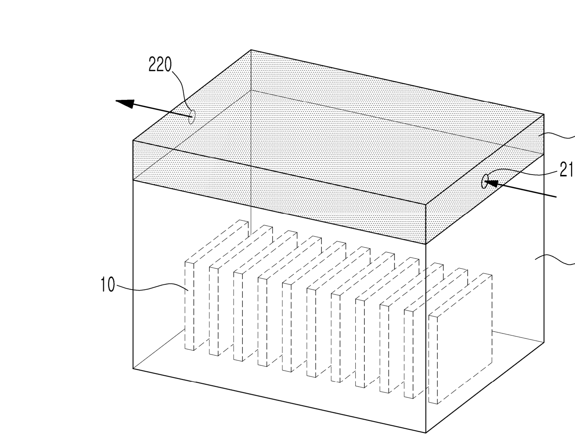

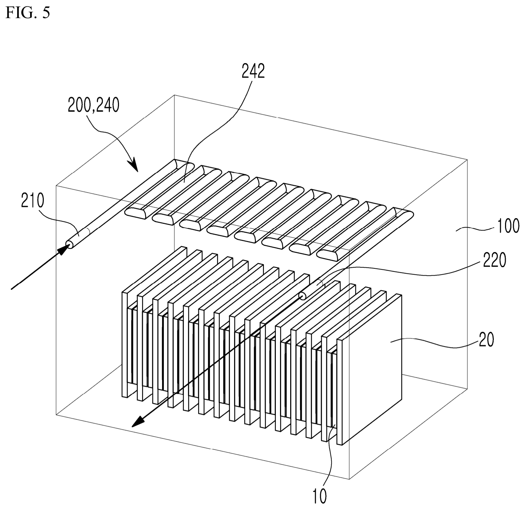

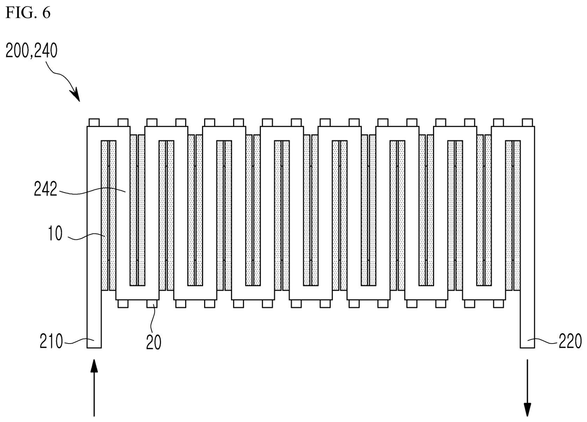

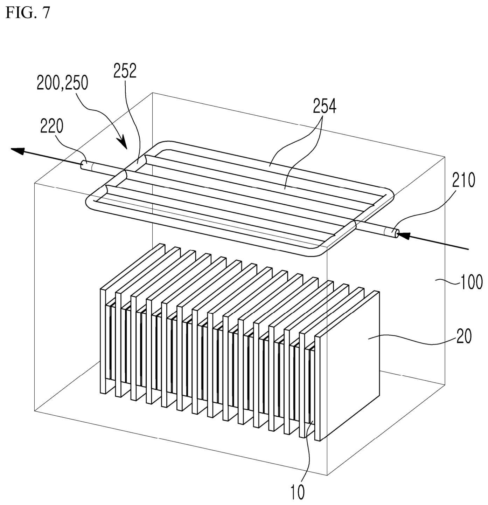

FIGS. 1 to 4 are schematic views of a battery immersion cooling apparatus having a cooling layer or a cooling plate according to an embodiment of the present disclosure. FIG. 5 is a schematic view of a battery immersion cooling apparatus having a cooling unit of a serpentine tube assembly according to an embodiment of the present disclosure. FIG. 6 is a schematic view illustrating an alignment between a cooling unit of a serpentine tube assembly and thermal barriers of battery cells according to an embodiment of the present disclosure. FIG. 7 is a schematic view of a battery immersion cooling apparatus having a cooling unit of a pipe-shaped structure according to an embodiment of the present disclosure.

As shown, the battery immersion cooling apparatus according to an embodiment of the present disclosure includes a module case 100 accommodating a plurality of battery cells 10 and containing an immersion coolant configured to cool the battery cells 10 by immersion, and a cooling unit 200 disposed on one side of the module case 100 and configured to circulate a circulation coolant. The immersion coolant may fully immerse the battery cells 10. Alternately, the immersion coolant may immerse only portions of the battery cells 10. For example, the lower portions of the battery cells 10 may be immersed in the immersion coolant, and the remaining upper portions of the battery cells 10 may be exposed above the immersion coolant. The cooling unit 200 includes a circulation coolant inlet 210 and a circulation coolant outlet 220, and the circulation coolant circulates through a flow path of the cooling unit 200 and exchanges heat with the immersion coolant to indirectly cool the battery cells 10.

As used herein, "indirectly cooling" the battery cells refers to cooling the battery cells without direct contact between the circulation coolant and the battery cells-i.e., the circulation coolant exchanges heat with the immersion coolant, which in turn cools the battery cells by direct contact.

The present disclosure relates to cooling battery cells 10 by immersion and may include the module case 100 and the cooling unit 200.

The module case 100 according to an embodiment of the present disclosure accommodates the plurality of battery cells 10 and contains the immersion coolant therein. The immersion coolant is a fluid that directly immerses and cools the battery cells 10. Selection among these fluids depends on factors including operating temperature range, required dielectric strength, viscosity, cost, and environmental considerations. Dielectric fluids, for example, mineral oil-based fluids (such as transformer oils), synthetic oil-based fluids, natural ester-based fluids, synthetic ester-based fluids, fluorocarbon-based fluids, perfluorinated fluids, hydrofluoroether (HFE) fluids, and perfluoropolyether (PFPE) fluids may be used for immersion cooling. Non-limiting examples of suitable synthetic oils-based dielectric fluids may include poly-alpha-olefin (PAO) and synthetic esters. Non-limiting examples of natural and synthetic esters-based fluids include those in Cargill's Priolube EF series. Non-limiting examples of fluorocarbon-based and perfluorinated fluids include Fluorinert-based fluids, and non-limiting examples of HFE fluids include Novec-based fluids, for example, Novec 649, Novec 7100, etc. Non-limiting examples of PFPE fluids include PFPE-based products. These dielectric cooling fluids exhibit excellent high insulation properties, flame retardancy, and chemical stability, and have high reliability in high-temperature environments.

The battery cells 10 may be configured as one of a pouch type, a prismatic type, and a cylindrical type, or a combination thereof, and the module case 100 may accommodate cells of these various shapes. The immersion coolant directly contacts these cells to absorb heat, thereby mitigating local heat generation and maintaining a uniform overall temperature distribution.

The cooling unit 200 according to an embodiment of the present disclosure is a structure in which the circulation coolant circulates, and being disposed on one side of the module case 100,. Here, "one side" refers to at least one of an upper side, a lower side, and a lateral side of the module case 100. For example, when the cooling unit 200 is disposed in the upper side of the module case 100, the cooling unit 200 may be disposed in the upper portion of the module case 100 or on the top of the module case 100. Similarly, when the cooling unit 200 is disposed in the lower side of the module case 100, the cooling unit 200 may be disposed in the lower portion of the module case 100 or on the bottom of the module case 100. When the cooling unit 200 is disposed in the lateral side of the module case 100, the cooling unit 200 may be disposed in the lateral portion of the module case 100 or on the lateral surface of the module case 100. The cooling unit 200 may be disposed in one or more directions depending on a cooling purpose and a system design.

A flow path is formed in the cooling unit 200 according to an embodiment, and the circulation coolant may circulate from the circulation coolant inlet 210 to the circulation coolant outlet 220 through the flow path. The circulation coolant exchanges heat with the immersion coolant through an outer wall of the cooling unit 200, thereby indirectly cooling the battery cells 10. This indirect heat exchange method may secure cooling performance while maintaining electrical insulation, thereby improving safety and cooling reliability of the system.

The cooling unit 200 according to an embodiment of the present disclosure may be disposed on at least one of an upper side, a lower side, and a lateral side of the module case 100.

The module case 100 according to an embodiment provides a space accommodating the plurality of battery cells 10 and containing the immersion coolant to directly cool the battery cells 10 by immersion. The module case 100 may be made of stainless steel, tempered glass, acrylic, engineering plastic, or aluminum alloy. Stainless steel is generally widely used due to its high corrosion resistance to coolant and structural robustness. Tempered glass and acrylic may be used when visual monitoring is required, as they allow for direct observation of internal coolant flow or bubble formation; however, strength reinforcement may be necessary. Engineering plastics include Polytetrafluoroethylene (PTFE) and Polyetheretherketone (PEEK). As they are chemically nearly inert, there is little concern regarding coolant contamination; however, they are expensive and may require strength reinforcement. Aluminum alloys have good thermal conductivity, allowing for some heat dissipation through the case itself, and offer high strength-to-weight ratio; however, surface anodizing is required due to the possibility of corrosion depending on changes in the coolant's pH. The material for the module case may be selected considering various factors such as strength, chemical reactivity with the refrigerant, weight, and cost. The module case 100 may be formed as a sealed or semi-sealed enclosure configured to retain the battery cells 10 and the immersion coolant. In this case, the cooling unit 200 may be disposed inside or outside the module case 100, and the inside or outside may specifically include regions of the upper side, the lower side, and the lateral side.

The "upper side" is a region above the battery cells 10 in the module case 100, which is typically a space where a gas discharge passage may be formed. When the cooling unit 200 is disposed in the upper side of the module case 100, interference from high-temperature gas released during thermal runaway may be minimized, and cooling efficiency may be secured.

The "lower side" is a region below the battery cells 10 in the module case 100, which assists bottom cooling in a heat transfer path, and a structural support may also be installed in this region.

The "lateral side" refers to left and right or front and rear sides of the module case 100, and may be suitable for expanding a heat exchange area or arranging a plurality of cooling units 200 in parallel.

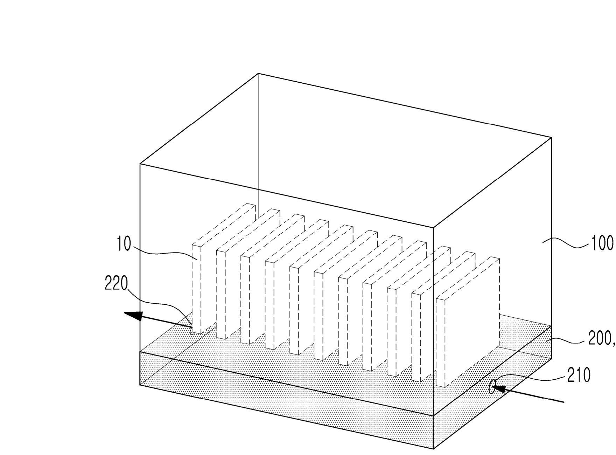

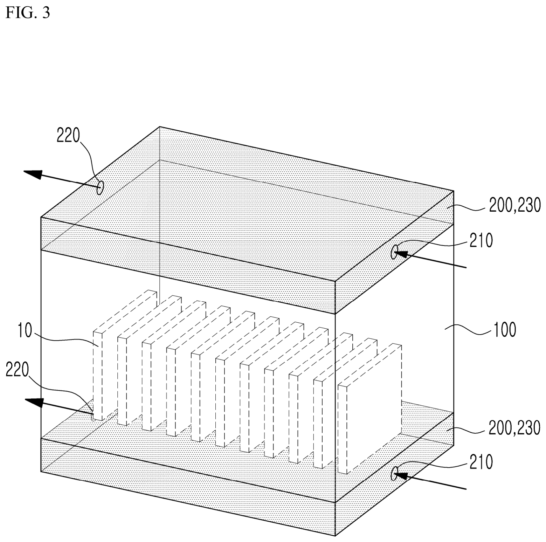

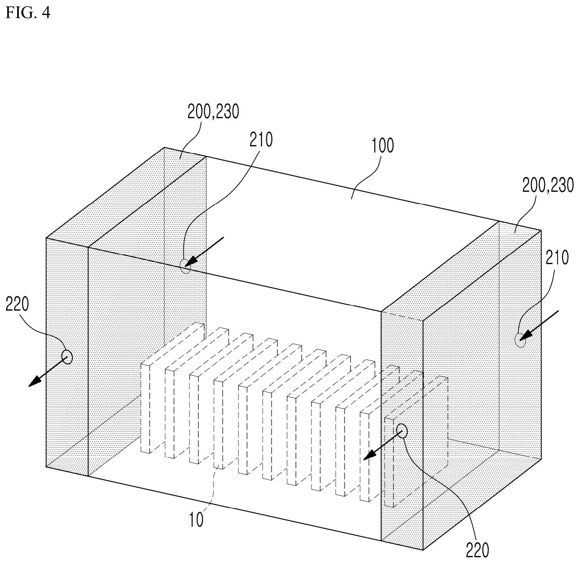

Referring to FIG. 1 according to an embodiment, the cooling unit (cooling layer) 200 having a plate-shaped structure is installed in the upper side of the module case 100. This is to ensure efficient cooling in consideration of heat distribution characteristics above the battery cells 10 and conditions for thermal runaway occurrence. In addition, in other embodiments, a structure in which the cooling unit 200 is disposed in the lower side (see FIG. 2) or the lateral side (see FIG. 4) is possible, and a structure in which the cooling unit 200 is disposed on both the top and the bottom is also possible (see FIG. 3). Furthermore, a plurality of cooling units 200 may be connected in series or in parallel to form a flow path, so that cooling performance may be adjusted.

According to an embodiment of the present disclosure, by disposing the cooling unit 200 on at least one of the upper side, the lower side, and the lateral side without being limited to a specific direction of the module case 100, heat management for the entire system may be efficiently achieved. In particular, since the installation position of the cooling unit 200 may be selected by comprehensively considering spatial constraints, an installation direction, internal cell density, and an arrangement structure of the system, the cooling unit 200 may be applied to various types of Energy Storage Systems (ESS) or battery packs.

As described above, according to an embodiment of the present disclosure, since the cooling unit 200 may be selectively disposed at various positions of the module case 100, various cooling paths may be provided, temperature deviation between the battery cells 10 may be reduced, and uniformity of cooling efficiency may be promoted. This may improve overall heat management performance of an ESS module and contribute to suppression of thermal runaway propagation between the battery cells 10 and improvement of system reliability.

The cooling unit 200 according to an embodiment of the present disclosure may include a cooling layer 230 having a plate-shaped structure in which a planar cooling flow path is formed therein.

The cooling unit 200 is installed to be physically separated on an outside of the module case 100, and the circulation coolant circulates therein to indirectly cool the battery cells 10 through heat exchange with the immersion coolant inside the module case 100.

The cooling layer 230 of the plate-shaped structure may typically be manufactured in a flat or thin plate shape. In the plate-shaped structure, a plurality of planar cooling flow paths are formed therein such that the circulation coolant flows from an inlet to an outlet, and the cooling flow paths may be formed as a single loop or multiple loop structure. The planar cooling flow path refers to a flow channel formed inside a plate material by methods such as injection, machining, lamination, or molding, and may include a straight or curved cooling path.

In a specific embodiment, when the cooling layer 230 is installed on the top of the module case 100, the cooling layer 230 may be formed of a metal or composite material having high heat transfer efficiency. As the circulation coolant circulating through the internal flow path of the cooling layer 230, a water-based cooling fluid PG25 or an insulating cooling fluid may be used to secure thermal conductivity and insulation.

In addition, the cooling layer 230 may be closely attached integrally with the module case 100 or may be independently installed as a physically separated structure according to a system design.

According to an embodiment, the cooling layer 230 may be arranged in the upper side, the lower side, or the lateral side of the module case 100, and may be installed on one side of the module case 100 according to a cell arrangement and heat generation distribution inside the module case 100. Also, cooling performance may be adjusted stepwise by configuring a plurality of cooling layers 230 in series or in parallel.

The cooling layer 230 having such a plate-shaped structure is easy to manufacture and capable of modularization in various shapes and sizes, making it suitable for mass production.

As described above, according to an embodiment of the present disclosure, since the cooling unit 200 is formed of the cooling layer 230 having a plate-shaped structure in which the planar cooling flow path is formed therein, the circulation coolant circulates evenly along the flow path and performs effective heat exchange with the immersion coolant, thereby ensuring uniformity in a cooling path. Accordingly, improvement in cooling performance of the entire system may be promoted by improving thermal response speed and reducing deviation in cell temperature.

FIG. 5 is a schematic view of a battery immersion cooling apparatus having a cooling unit 200 of a serpentine tube assembly 240 according to an embodiment of the present disclosure. FIG. 6 is a schematic view illustrating an alignment between a cooling unit 200 of a serpentine tube assembly 240 and thermal barriers 20 of battery cells 10 according to an embodiment of the present disclosure.

As shown, the cooling unit 200 according to an embodiment of the present disclosure includes a serpentine tube assembly 240 in which a plurality of cooling pipes 242 are arranged in repeating pattern (e.g., a serpentine shape, a zigzag shape, or a bent or coiled pattern), and the cooling pipes 242 may be aligned to correspond to thermal barriers 20 disposed between the battery cells 10.

The cooling unit 200 is disposed outside or inside the module case 100 containing the battery cells 10 to allow the circulation coolant to circulate, and the cooling pipe 242 is a cooling flow path in the form of a pipe through which the cooling fluid flows. The cooling pipes 242 according to an embodiment are repeatedly arranged at regular intervals and connected to each other. For example, the repeated arrangement may form a loop-type cooling flow path having a serpentine shape, a zigzag shape, or a bent or coiled pattern.

That is, a single pipe may be bent in a winding manner to form a continuous cooling flow path, or a plurality of straight cooling pipes 242 may be connected in parallel or in series to form a continuous cooling structure.

According to an embodiment, the plurality of cooling pipes 242 arranged in the serpentine tube assembly 240 may be aligned to correspond to the thermal barriers 20 formed between the battery cells 10.

The thermal barrier 20 is a structure disposed to suppress heat transfer between the battery cells 10 and prevent thermal runaway propagation, is generally formed of a material having excellent heat resistance and heat insulation properties, and is located at a boundary between the battery cells 10.

The serpentine tube assembly can be spaced apart from cell tops by a predetermined distance to secure a gas discharge path during thermal runaway, minimizing secondary risks such as explosion, overpressure, or combustion propagation. When thermal barriers are aligned with cooling pipes, heat accumulation at the barriers may be reduced and propagation of a runaway reaction may be blocked at an early stage.

The alignment of the plurality of cooling pipes 242 to correspond to the thermal barriers 20 means that each cooling pipe 242 is disposed to coincide with or be adjacent to a corresponding barrier portion. This allows intensive cooling to be performed at the boundary area between the battery cells 10. This alignment scheme concentrates heat removal in the boundary region where heat is likely to diffuse when thermal runaway propagation (TP) occurs, thereby providing a structure that does not obstruct an upward gas flow when thermal runaway occurs, while blocking the propagation of a runaway reaction.

In a specific embodiment, referring to FIGS. 5 and 6, it can be determined that the plurality of cooling pipes 242 installed on top ends of the battery cells 10 are aligned in a vertical or horizontal direction along the inter-cell thermal barriers 20, and in each cooling pipe 242, the circulation coolant introduced from the circulation coolant inlet 210 circulates along the coil-shaped flow path to perform heat exchange. This serpentine tube assembly 240 may be formed as a single loop or multiple loops according to a module design, and the circulation coolant, such as dielectric oil or PG25, circulates to secure insulation and thermal conductivity.

As described above, according to the cooling unit 200 of the serpentine tube assembly 240 according to an embodiment of the present disclosure, by effectively addressing the inter-cell boundary region where heat transfer is concentrated within the battery module, heat aggregation phenomenon that may occur in the thermal barrier 20 may be reduced, and temperature deviation between cells may be minimized. Through this, reliability and stability of the system may be secured, and propagation of a runaway reaction may be blocked at an early stage when thermal runaway occurs.

The serpentine tube assembly 240 according to an embodiment of the present disclosure may be disposed to be spaced apart from top ends of the battery cells 10 by a predetermined distance so as not to obstruct an upward gas flow when thermal runaway occurs.

According to an embodiment, the cooling unit 200 includes the serpentine tube assembly 240 in which a plurality of cooling pipes 242 are repeatedly arranged, and the serpentine tube assembly 240 may be aligned to correspond to the thermal barriers 20 disposed between the battery cells 10.

Thermal runaway may be caused by factors such as an internal short circuit of the battery cells 10, an external impact, or a high-temperature environment, and during the process, gas and heat are rapidly generated and tend to be released in an upward direction. Accordingly, the serpentine tube assembly 240 may be disposed to be spaced apart from the top ends of the battery cells 10 by a predetermined distance ("spacing distance") so as not to obstruct the upward gas flow formed during thermal runaway. Here, the "spacing distance" refers to securing a structural and spatial distance, for example, about several millimeters to several centimeters, and may be adjusted according to shapes, installation densities, and expected gas discharge amounts of the battery cells 10. The spacing distance may be between 5 mm and 50 mm, preferably between 10 mm and 30 mm, depending on expected gas discharge volume and cell geometry.

According to an embodiment, the serpentine tube assembly 240 may be installed inside a top cover of the module case 100 to secure a space for the upward gas flow, or may be fixed via a support frame or the like at a point spaced apart by a predetermined height above the top of the thermal barrier 20. Through this, by securing a flow path through which the upward gas is released and passes, secondary risk factors such as explosion, blast pressure, or combustion propagation may be minimized, and flow resistance caused by the structure of the cooling unit 200 is minimized. For example, in certain embodiments, by securing an unobstructed gas venting pathway above the battery cells, the apparatus reduces the risk of pressure buildup that could lead to module rupture, and facilitates safe venting in compliance with industry safety requirements for lithium-ion battery systems.

As described above, by disposing the cooling unit 200 of the serpentine tube assembly 240 according to an embodiment of the present disclosure to be spaced apart from the top ends of the battery cells 10 by a predetermined distance, a gas discharge path during thermal runaway is secured, and the gas is guided so that it does not directly collide with or stagnate around the cooling unit 200, thereby improving safety and durability of the entire system.

FIG. 7 is a schematic view of a battery immersion cooling apparatus having a cooling unit 200 of a pipe-shaped structure 250 according to an embodiment of the present disclosure.

The cooling unit 200 according to an embodiment of the present disclosure may be a pipe-shaped structure 250 including a plurality of straight or bent cooling pipes.

The cooling unit 200 having the pipe-shaped structure 250 refers to a configuration in which a passage through which the cooling fluid flows consists of a plurality of cooling pipes, and these cooling pipes have a straight or bent shape. The cooling pipe of the pipe-shaped structure 250 is generally a pipe body for fluid circulation having a cross-section of a circular, oval, rectangular, or polygonal shape, and may be designed in various shapes according to a structure and spatial constraints of a battery module.

According to an embodiment, the plurality of straight cooling pipes typically have a simple and intuitively formed cooling path, thereby minimizing resistance of the cooling flow path so that the circulation coolant circulates efficiently. On the other hand, the bent cooling pipes are utilized when disposing the cooling unit 200 on a curved surface or within a limited space inside or outside the module case 100, and may be flexibly applied to required positions. For example, the bent structure may be implemented in various forms such as a U-shape, a Z-shape, an S-shape, or a spiral shape.

As described above, by adopting the cooling unit 200 of the pipe-shaped structure 250 according to an embodiment of the present disclosure, it is easy to manufacture due to a simple structure, and may be applied to various shapes of battery cells 10 and module structures. For example, since the pipe-shaped structure 250 allows for adjustment of flow path resistance and flow rate by adjusting a length and a bending angle of the cooling flow path, cooling performance may be adjusted under various operating conditions. As a result, the present disclosure may reduce temperature deviation between battery cells 10 and improve reliability and lifespan of the system.

In the pipe-shaped structure 250 according to an embodiment of the present disclosure, the circulation coolant may flow in a single direction from the circulation coolant inlet 210 to the circulation coolant outlet 220.

According to a specific embodiment, as shown in FIG. 7, in the pipe-shaped structure 250, the circulation coolant introduced from the circulation coolant inlet 210 flows in one direction while passing through the plurality of cooling pipes, performs heat exchange with the immersion coolant around the battery cells 10 while flowing, and is then discharged to the outside through the circulation coolant outlet 220.

This flow in a single direction may be applied to a parallel flow path structure, a series flow path structure, or a mixed form thereof, and a loop length, a number of bends, a diameter of the cooling pipe, etc. may be adjusted according to a cooling system design.

Such a unidirectional flow prevents stagnation of the cooling fluid and prevents local overheating due to flow stagnation, thereby improving cooling uniformity of the system.

As described above, by configuring the pipe-shaped structure 250 according to an embodiment of the present disclosure to have a single-direction flow, a circulation path of the circulation coolant may be maintained predictably and stably, and heat exchange efficiency with the immersion coolant may be increased. Accordingly, indirect cooling performance of the battery cells 10 is improved, and even when thermal runaway occurs, a cooling response speed is improved, so that system reliability of the entire ESS module may be improved.

The pipe-shaped structure 250 according to an embodiment of the present disclosure includes distribution manifold tubes 252 and interconnecting tubes 254 connecting them, and the interconnecting tubes 254 may be arranged in parallel or in series.

The distribution manifold tubes 252 are for dispersing the cooling fluid in multiple directions or into multiple zones, and the interconnecting tubes 254 are for connecting the respective branched cooling paths in a parallel or series manner to secure flexibility and uniformity of fluid circulation.

As a specific embodiment, referring to FIG. 7, in the pipe-shaped structure 250, a plurality of distribution manifold tubes 252 are arranged at regular intervals along a longitudinal direction of the battery module, and the interconnecting tubes 254 are disposed between the distribution manifold tubes 252 to form a single flow path network. Such a structure may uniformly disperse a flow velocity of the cooling fluid and control a larger amount of cooling fluid to circulate in a specific area where heat is concentrated.

This parallel arrangement is advantageous for increasing cooling efficiency and reducing pressure loss, and the series arrangement may be easy for temperature control according to a flow direction of the cooling fluid. Each interconnecting tube 254 may be formed in various shapes such as a loop structure, an S-shape, a U-shape, or a trapezoidal shape, and may be designed according to intervals between the battery cells 10, a type of the cooling fluid, thermal load characteristics of the system, etc.

As described above, by configuring the pipe-shaped structure 250 according to an embodiment of the present disclosure with the distribution manifold tubes 252 and the interconnecting tubes 254 and arranging them in parallel or in series, dispersion and concentration of the flow path of the circulation coolant become easy, and cooling uniformity throughout the module may be promoted. Accordingly, cooling responsiveness may be improved even in a rapid heat generation situation such as thermal runaway.

The flow path of the cooling unit 200 according to an embodiment of the present disclosure may be connected in parallel or in series as a single loop or multiple loops.

In the present disclosure, the cooling unit 200 acts as a heat transfer means in which the circulation coolant flows along the internal flow path while being introduced through the circulation coolant inlet 210 and discharged to the circulation coolant outlet 220, thereby performing heat exchange with the immersion coolant. The flow path is a path through which the fluid circulates, and may be basically formed as a single loop or multiple loops, and each loop may be configured in a form of a parallel connection or a series connection.

The single loop according to an embodiment is a structure in which the fluid flows along one circulation path, whereas in the multiple loops, a plurality of circulation paths are configured independently, so that the cooling fluid may be intensively distributed to a specific area or flow rate control for each section is possible. These multiple loops may be connected in parallel or in series. The parallel connection supplies the cooling fluid to each loop simultaneously to provide a flow rate dispersion effect and may improve cooling uniformity, and the series connection has an advantage that a system configuration is simple and control is easy.

As a specific embodiment, the single loop structure may be implemented as a single circuit-type cooling pipe installed along a periphery of the battery module, and the circulation coolant starts from the circulation coolant inlet 210 and is discharged to the circulation coolant outlet 220 along one continuous path. In the multiple loop structure, a plurality of flow paths are installed on the top and the side or the bottom, respectively. For example, an upper loop may be provided for immediate reaction for suppressing rapid thermal runaway, and a lower loop may be provided for stable cooling for long-term operation. In the parallel structure, an inlet of each loop may be connected to the same main inlet pipe, and in the series structure, an outlet of one loop may be connected to an inlet of a next loop.

The circulation coolant according to an embodiment of the present disclosure is selected in consideration of physical properties such as cooling efficiency, insulation characteristics, viscosity, and stability, and in an embodiment, PG25 or dielectric oil may be used.

The PG25 refers to a water-based cooling fluid having a 25% (by mass) content of propylene glycol in purified water. PG25 is a water-based cooling fluid, has excellent heat transfer performance, excellent commercial availability, and may be widely used as a non-toxic material. Without wishing to be bound by theory, a 25% concentration provides an optimal balance between heat transfer performance, freeze protection, and cost-effectiveness for battery cooling applications.

The insulating cooling fluid may include at least one of mineral oil-based fluids, synthetic oil-based fluids, natural ester-based fluids, synthetic ester-based fluids, fluorochemical-based fluids, Fluorinert-based fluids, Novec-based fluids, and inert Perfluoropolyether (PFPE)-based fluids. The insulating cooling fluid has excellent high insulation properties, flame retardancy, and chemical stability, and has high reliability in a high-temperature environment.

The circulation coolant may be selected by comprehensively considering system specifications, a cell configuration, an operating temperature range, an electrical insulation requirement level, and the like.

The cooling unit 200 according to an embodiment of the present disclosure may be coupled to a metal heat sink or a phase change material (PCM) in a stacked manner.

When coupled with a metal heat sink or phase change material (PCM) in a stacked manner, the system improves thermal response speed and heat storage capacity. The metal heat sink performs immediate heat dissipation, while the PCM absorbs instantaneous heat by undergoing a phase change, effectively delaying temperature rise inside the system.

According to an embodiment, the cooling unit 200 is configured such that the circulation coolant circulates along an internal flow path to perform heat exchange with the immersion coolant, and may be additionally coupled to the metal heat sink or the phase change material in a stacked manner.

The stacked coupling refers to physically arranging an auxiliary cooling means having excellent thermal conductivity in close contact with the cooling unit 200. For example, the metal heat sink may be made of a metal material having high thermal conductivity, such as aluminum, copper, or nickel, and the PCM may respond to temperature changes by absorbing or releasing latent heat at a predetermined temperature.

Specifically, the metal heat sink may be attached to an outer wall of the cooling unit 200 using a thermally conductive adhesive or may be structurally molded integrally therewith. This helps overall heat diffusion of the cooling unit 200 by rapidly transferring heat absorbed by the circulation coolant to the outside. Meanwhile, the PCM is laminated on the cooling unit 200 with a predetermined thickness to induce a phase change from a solid phase to a liquid phase when the temperature rises rapidly, thereby absorbing a large amount of heat, and performs a thermal buffering action by releasing heat and recrystallizing into a solid phase when the temperature decreases again. For example, paraffin-based, salt hydrate-based, fatty acid-based, or polymer-based PCM may be applied as the PCM, and an operating temperature thereof may be set in a range of 20°C to 80°C. The specific phase change temperature is selected based on the normal operating temperature of the battery cells and the thermal runaway initiation temperature, typically between 40°C and 60°C for lithium-ion batteries.

The stacked coupling structure according to an embodiment of the present disclosure as described above improves a thermal response speed and heat storage capacity of the cooling unit, thereby assisting a heat exchange function based on circulation of the circulation coolant performed by the cooling unit alone, thereby improving stability of the entire cooling system. In particular, even when thermal runaway occurs or a rapid temperature rise is induced, the metal heat sink performs immediate heat dissipation, and the PCM absorbs instantaneous heat, thereby effectively delaying a temperature rise inside the system. Accordingly, thermal damage to the battery cells 10 may be prevented, and stability and reliability of the overall system may be improved.

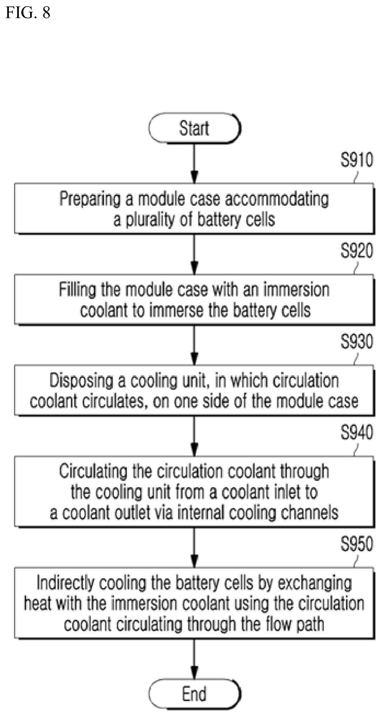

FIG. 8 is a flowchart illustrating a battery immersion cooling method according to an embodiment of the present disclosure. In the above embodiment, descriptions of some overlapping components will be briefly described or omitted in this embodiment.

As shown, the battery immersion cooling method according to an embodiment of the present disclosure may include preparing a module case 100 accommodating a plurality of battery cells 10 (S910), filling the module case 100 with an immersion coolant to cool the battery cells 10 by immersion (S920), disposing a cooling unit 200, in which a circulation coolant circulates, on one side of the module case 100 (S930), forming a circulation coolant inlet 210 and a circulation coolant outlet 220 in the cooling unit 200, and circulating the circulation coolant through a flow path (S940) and indirectly cooling the battery cells 10 by exchanging heat with the immersion coolant using the circulation coolant circulating through the flow path (S950).

First, a module case 100 capable of accommodating a plurality of battery cells (10) is prepared (S910). In this case, the module case 100 is formed to accommodate the plurality of battery cells 10 in an internal space thereof, and is implemented as a sealed or semi-sealed structure to enable immersion cooling. The battery cell 10 may be any one of a pouch type, a prismatic type, and a cylindrical type.

Next, the step (S920) of filling the module case 100 with the immersion coolant to cool the battery cells 10 by immersion is a step of completely immersing the plurality of battery cells 10 in the liquid cooling fluid to enable direct cooling on the entire surface of the battery cells 10. As the immersion coolant, generally, a mineral oil-based fluid, a synthetic oil-based fluid, a natural ester-based fluid, a synthetic ester-based fluid, a fluorochemical-based fluid, a Fluorinert-based fluid, a Novec-based fluid, or an inert perfluoropolyether (PFPE)-based fluid, which require insulation properties, may be used. The immersion coolant exists in a stationary or natural convection state, and may continuously maintain a cooling effect through heat exchange with the cooling unit 200.

According to an embodiment of the present disclosure, the step (S930) of disposing the cooling unit 200, in which the circulation coolant circulates, on one side of the module case 100 is a step of implementing an indirect cooling structure by disposing a heat exchange unit operating independently outside the battery module. The cooling unit 200 is thermally closely linked with the module case 100, and may be mounted at at least one position among a top, a bottom, and a side of the module case 100. The cooling unit 200 may be formed of at least one of a cooling layer 230 having a plate-shaped structure, a serpentine tube assembly 240, and a pipe-shaped structure 250.

According to an embodiment of the present disclosure, the step (S940) of forming the circulation coolant inlet 210 and the circulation coolant outlet 220 in the cooling unit 200 and circulating the circulation coolant through the flow path is a step in which a flow path is formed to allow the cooling fluid to flow inside the cooling unit 200, and the circulation coolant is continuously circulated through a pump (e.g., a centrifugal pump, gear pump) or the like. The circulation coolant does not directly contact the immersion coolant, but moves along the flow path structure to perform indirect cooling through heat exchange with the immersion coolant. The flow path is formed as a single loop or multiple loop structure, and may be designed in a parallel or series flow manner. In this case, the cooling unit may be coupled to a metal heat sink or a phase change material in a stacked manner to increase thermal conductivity performance.

According to an embodiment of the present disclosure, the step (S950) of indirectly cooling the battery cells 10 by exchanging heat with the immersion coolant using the circulation coolant circulating through the flow path may suppress a temperature rise of the battery cells 10 by stably lowering a temperature of the immersion coolant. The circulation coolant is linked with an external heat exchanger or an external cooling system to realize stable heat control for a long time, and may effectively control a temperature rise even in a thermal runaway situation.

Although the above steps are described in a particular order, it will be understood that the steps may be performed in different orders or simultaneously where technically feasible. For example, step (S930) (disposing the cooling unit) may be performed before step (S920) (filling with immersion coolant), or these steps may be performed concurrently.

As described above, the immersion cooling apparatus and method according to embodiments of the present disclosure provide a dual cooling path by combining direct cooling through the immersion coolant inside the module case 100 and indirect cooling based on the circulation coolant through the external cooling unit 200, thereby inducing a rapid and stable temperature drop when thermal runaway occurs, which may improve system reliability and safety. In addition, when thermal runaway occurs, thermal runaway propagation from an initial heat generation point may be effectively blocked.

Furthermore, since the circulation coolant is continuously circulated through the flow path in the cooling unit 200 formed on one side of the module case 100, a local temperature rise of the immersion coolant may be suppressed.

Accordingly, the dual cooling scheme according to an embodiment of the present disclosure may secure safety and reliability of the system through suppression of thermal runaway, improvement of cooling efficiency, or uniformization of cell temperature in various industrial application fields such as Energy Storage Systems (ESS), Electric Vehicles (EV), and Uninterruptible Power Supplies (UPS).

The contents described above are merely examples applying the principles of the present disclosure, and other configurations may be further included without departing from the scope of the present disclosure. For example, at least some of the various embodiments of the present disclosure described above may be combined.

## Claims

1. A battery immersion cooling apparatus comprising:
a module case (100) accommodating a plurality of battery cells (10) and containing an immersion coolant configured to immerse the battery cells (10); and
a cooling unit (200) disposed on at least one side of the module case (100) and configured to circulate a circulation coolant,
wherein the cooling unit (200) includes a circulation coolant inlet (210) and a circulation coolant outlet (220), and wherein the circulation coolant circulates through a flow path of the cooling unit (200) and exchanges heat with the immersion coolant to indirectly cool the plurality of battery cells (10).

2. The battery immersion cooling apparatus of claim 1, wherein the cooling unit (200) is disposed on at least one of an upper side, a lower side, and a lateral side of the module case (100).

3. The battery immersion cooling apparatus of claim 1 or 2, wherein the cooling unit (200) includes a cooling layer (230) having a plate-shaped structure in which a planar cooling flow path is formed.

4. The battery immersion cooling apparatus of any one of claims 1 to 3, wherein the cooling unit (200) includes a serpentine tube assembly (240) having a plurality of cooling pipes (242) arranged in a repeating pattern, and wherein the plurality of cooling pipes (242) are aligned with thermal barriers disposed between adjacent battery cells (10) within the plurality of battery cells (10).

5. The battery immersion cooling apparatus of claim 4, wherein the serpentine tube assembly (240) is disposed at a vertical distance above top ends of the plurality of battery cells (10).

6. The battery immersion cooling apparatus of any one of claims 1 to 3, wherein the cooling unit (200) includes a pipe-shaped structure (250) including a plurality of straight or bent cooling pipes.

7. The battery immersion cooling apparatus of claim 6, wherein the circulation coolant flows in a single direction from the circulation coolant inlet (210) to the circulation coolant outlet (220) within the pipe-shaped structure (250).

8. The battery immersion cooling apparatus of claim 6 or 7, wherein the pipe-shaped structure (250) includes distribution manifold tubes (252) and interconnecting tubes (254) connecting the distribution manifold tubes (252), and wherein the interconnecting tubes (254) are arranged in parallel or in series.

9. The battery immersion cooling apparatus of any one of claims 1 to 8, wherein the flow path of the cooling unit (200) is configured as a single loop or multiple loops connected in parallel or in series.

10. The battery immersion cooling apparatus of any one of claims 1 to 9, wherein the circulation coolant includes at least one selected from the group consisting of a propylene glycol/water solution, a mineral oil-based dielectric fluid, a synthetic oil-based dielectric fluid, a natural ester-based dielectric fluid, a synthetic ester-based dielectric fluid, a fluorocarbon-based dielectric fluid, a perfluorinated fluid, a hydrofluoroether (HFE) fluid, and a perfluoropolyether (PFPE) fluid.

11. The battery immersion cooling apparatus of any one of claims 1 to 10, wherein the cooling unit (200) is coupled to a metal heat sink for immediate heat dissipation or a phase change material (PCM) for latent heat absorption in a stacked manner.

12. A battery immersion cooling method comprising:
preparing a module case (100) accommodating a plurality of battery cells (10);
filling the module case (100) with an immersion coolant to immerse the battery cells (10);
disposing a cooling unit (200) on one side of the module case (100), the cooling unit (200) having a circulation coolant inlet (210) and a circulation coolant outlet (220) defining a flow path therebetween;
circulating a circulation coolant through the flow path of the cooling unit (200) from the circulation coolant inlet (210) to the circulation coolant outlet (220); and
indirectly cooling the battery cells (10) by exchanging heat with the immersion coolant using the circulation coolant circulating through the flow path.

13. The battery immersion cooling method of claim 12, wherein the cooling unit (200) includes a cooling layer (230) having a plate-shaped structure in which one or more planar cooling flow path are formed.

14. The battery immersion cooling method of claim 12 or 13, wherein the cooling unit (200) is formed as a serpentine tube assembly (240) having a plurality of cooling pipes (242) arranged in a repeating pattern, and wherein the cooling pipes (242) are aligned with thermal barriers disposed between adjacent battery cells (10) within the battery cells (10).

15. The battery immersion cooling method of any one of claims 12 to 14, wherein the cooling unit (200) is formed as a pipe-shaped structure (250) including a plurality of straight or bent cooling pipes.
